# EUROPEAN PATENT SPECIFICATION

(11) **EP 0 381 806 B1**
(45) Date of publication and mention of the grant of the patent: **12.05.1993**
(21) Application number: 89112578.3
(22) Date of filing: 10.07.1989
(51) Int. Cl.: A23L 1/06, A23P 1/08, A23C 13/12

(54) **Jellied foods and manufacturing method thereof**
Gelierte Nahrungsmittel und Verfahren zu ihrer Herstellung
Denrées alimentaires gélatineuses et méthode pour leur préparation

(30) Priority: 08.02.1989 JP 29195/89
(43) Date of publication of application: 16.08.1990
(73) Proprietor: YUGEN GAISHA KIKUYA, Ooita-Shi Ooita-Ken (JP)
(72) Inventor: Saito, Satoshi, Beppu-Shi Ooita-ken (JP)
(74) Representative: Klunker . Schmitt-Nilson . Hirsch

(56) References cited:
- PATENT ABSTRACTS OF JAPAN, vol. 7, no. 69 (C-158)(1214), 23rd March 1983
- PATENT ABSTRACTS OF JAPAN, vol. 13, no. 105 (c-575)(3453), 13th March 1989

## Description

### BACKGROUND OF THE INVENTION

The present invention relates to a jellied food manufactured by incorporating a substance into a cream or jam state into a substance in a jelly state and also relates to a method of manufacturing the jellied food.

It is conventionally known, e.g. in JP-A-45-29422, to manufacture a jellied food by incorporating a jelly-like material together with another material such as a cream or jam-like material in a container. For example, regarding a jellied cake, when it is desired to add a substance in a cream, sauce or jam state, merely called a cream-like substance or jam-like substance hereinafter, into a jellied cake, for providing an additional flavor, prepared by mixing a gelling agent such as a soft azuki-bean or red bean jelly, mousse, jelly or the like, a substance in a jelly state, merely called a jelly-like substance hereinafter, is first packed into a container in the shape of a can and a cream-like or jam-like substance is then placed over or coated on the jelly-like substance and further jelly-like substance is placed thereover. The can is thereafter sealed and heated at a temperature of about 80 to 110°C to sterilize it.

In another known technology for incorporating a substance into a liquid state or a semi-liquid state into a jellied cake, a substance such as sodium alginic acid capable of being gelated by the reaction of diatomic metallic ions is utilized in place of the gelling agent as a material of the jellied cake. These substances are mixed together and heated, and thereafter, dropped into a solution containing the diatomic metallic ions, whereby the outer surface of the jelly like substance in contact with the solution is solidified and the central portion of the jelly-like substance can be preserved in the liquid or semi liquid state.

However, with conventional methods for incorporating a cream- or jam-like substance into a jelly-like substance, the cream- or jam-like substance as an additive is mixed with the jelly-like substance when heated, and sterilized after packing in the container. It is therefore liable to lose the essential flavor and quality of a jellied cake.

In another conventional method wherein the jelly-like substance is dropped into a solution in which the diatomic metallic ions exist to thereby solidify the outer surface of the jelly-like substance, the substance remaining in the central portion of the jelly-like substance in a liquid or semi-liquid state and the solidified outer surface are both made of the same substance. This results in a disadvantageous lack of improvement in the taste or sense of taste.

Furthermore, as a general matter, it is desirable that the jellied cake have the cream- or jam-like already mixed with the jelly-like substance when the can is opened for serving, although this matter is of an individual taste. However, in the conventional production methods, the jelly-like substance would become mixed with the cream- or jam-like substance when it is heated for sterilization, and so it is necessary to keep these substances separate and mix them at the time of serving.

From the document JP-A-63,279,758 a jelly-like confectionery and a method of preparation thereof have come to be known. The known jelly-like confectionery comprises a first substance in a jelly state and a second substance in a cream- or jam-state to be incorporated into said first substance. A gelling agent having a melting point above the temperature of sealing and heating is used to prepare a jelly-like substance which is mixed, stirred and heat-agitated to provide a liquid substance at a given temperature. The obtained liquid substance is then filled into a container. A pasty substance prepared by heating and blending amylopectine and water with a jam-like or creamy substance is added to the jelly-like substance before solidification thereof homegeneously diluted by heating. The resulted blend is subsequently solidified by freezing and forming and incorporated into the jelly-like substance in the above-mentioned container to instantaneously and quickly freeze the jelly-like substance around the frozen creamy substance. Then, the container is thermically sealed.

From the document JP-A-58 5144 a method of production of jellied food has come to be known. A vessel is filled with a plurality of solid jelly pieces with high sol-transformation temperature and a liquid jelly that is obtained by heating a low sol-transformation temperature jelly and tightly sealed, then heated under pressure to effect sterilization.

### SUMMARY OF THE INVENTION

Accordingly, it is an object of the present invention to eliminate the defects or disadvantages of the prior art described above and to provide a jellied food essentially consisting of a jelly-like substance and a cream- or jam-like substance incorporated into substantially the central portion in the jelly-like substance contained in a can in a state where both the substances are not mixed until the time when the can is opened.

Another object of the present invention is to provide a method of manufacturing a jellied food contained in a can, in which a cream- or jam-like substance is incorporated into a jelly-like substance contained in the can and without being mixed together.

These and other objects can be achieved according to the present invention in one aspect by providing a jellied food to be contained in a container, then sealed and thereafter subjected to a heat sterilization process, the jellied food essentially consisting of a first substance in a jelly state to be contained in a container after mixing and heat agitating the same, the jelly-like substance containing a gelling agent having a melting point of greater than the heating temperature during the heat sterilization process and a second substance in a state of cream or jam to be contained in the jelly-like substance in the container within a temperature range below the melting point of the gelling agent of the jelly-like substance after mixing, heat agitating, then solidifying and shaping the same in a predetermined shape, the cream- or jam-like substance containing a gelling agent having a melting point lower than that of the gelling agent of the jelly-like substance. The jelly-like substance and the cream- or jam-like substances contained in the container are heat sterilized at a temperature of the melting point of the gelling agent of the jelly-like substance so that the cream- or jam like substance is reserved in the jelly-like substance in a semi-liquid state while preserving the shape and qualities of the cream- or jam-like substance at the time when it was incorporated into the jelly-like substance.

The jellied food of the character described above is manufactured according to the present invention by a method of manufacturing a jellied food characterized by the steps of preparing a jelly-like substance containing a gelling agent having a melting point of greater than the heating temperature during the heat sterilization process, mixing and heat agitating the jelly-like substance in the semi-liquid state, filling the mixed and heat agitated jelly-like substance in a container, preparing at the same time as the preparation of the jelly-like substance, a cream- or jam-like substance by mixing, heat agitating, then solidifying and shaping the same in a predetermined shape, the cream- or jam-like substance containing a gelling agent having a melting point lower than that of the gelling agent of the jelly-like substance, incorporating the cream- or jam-like substance into the jelly-like substance contained in the container within a temperature range at which the jelly-like substance is not solidified and a range below the melting point of the gelling agent of the jelly-like substance, sealing and washing the container with the jelly-like substance and cream- or jam-like substance contained, and heat sterilizing the container at a temperature of the melting point of the gelling agent of the jelly-like substance so as to incorporate the cream-or jam-like substance into the jelly-like substance while preserving the shape and qualities of the cream- or jam-like substance in a semi-liquid state at the time when it was contained in the container.

There can be provided a jellied food to be contained in a container, then sealed and thereafter subjected to a heat sterilization process, the jellied food essentially consisting of a jelly-like substance in a liquid state to be contained in a container after mixing and heat agitating the same, the jelly-like substance containing a gelling agent having a melting point greater than a heating temperature during the heat sterilization process, and a paste substance prepared by mixing a cream- or jam-like substance with amylopectin and water to dilute the cream- or jam-like substance as a mixture, and then uniformly heating the mixture. The paste substance is frozen in a predetermined shape and then contained in the jelly-like substance contained in the container so as to instantaneously solidify a part of the jelly-like substance surrounding the frozen paste substance contained in the jelly-like substance so that the paste substance is incorporated into the jelly-like substance while preserving the shape and qualities at the time when it was contained in the container after the sealing and heat sterilizing process.

The jellied food of the character described above is manufactured according to the present invention by a method of manufacturing a jellied food characterized by the steps of preparing a jelly-like substance containing a gelling agent having a melting point greater than the heating temperature during the heat sterilization process, mixing and heat agitating the jelly-like substance in a liquid state at a predetermined temperature, containing the mixed and heat-agitated jelly-like substance into a container, preparing at the same time as the preparation of the jelly-like substance before a solidification thereof, a paste substance by mixing a cream- or jam-like substance with amylopectin and water to dilute the cream- or jam-like substance as a mixture, uniformly heating the mixture and freezing the same in a predetermined shape, containing the frozen substance into the jelly-like substance contained in the container so as to instantaneously solidify a part of the jelly-like substance surrounding the frozen substance, and sealing, washing and heat sterilizing the container so as to incorporate the contained paste substance while preserving the shape and qualities of the cream- or jam-like substance at the time when it was contained in the container.

According to the present invention, in one aspect, the jelly-like substance in the liquid state is first contained in the container and the cream- or jam-like substance separately prepared and solidified in a predetermined shape, is then contained in the jelly-like substance in the container at a temperature range at which the jelly-like substance is not solidified and a range below a melting point of the gelling agent contained in the jelly-like substance. The cream- or jam-like substance includes a gelling agent having a melting point lower than that of the gelling agent of the jelly-like substance. The container is then heat sterilized at a temperature of the melting point of the gelling agent of the jelly-like subject, whereby a jellied food in a semi-liquid state in the container can be obtained with the cream- or jam-like substance having the shape and qualities at the time when it was contained in the container.

According to the present invention, in another aspect, the paste substance prepared by mixing the cream-or jam-like substance with amylopectin and water is frozen, and the frozen paste substance is incorporated into the separately prepared jelly-like substance and contained in the container before the jelly-like substance is solidified. The part of the jelly-like substance surrounding the frozen substance is instantaneously solidified to form a thin film therearound. The container is then sealed and heat sterilized, whereby a jellied food with a cream- or jam-like substance having the shape and qualities at the time when it was contained in the container, can be obtained.

### BRIEF DESCRIPTION OF THE DRAWINGS

In the accompanying drawings:
Fig. 1 is a view showing processes for manufacturing a jellied cake in accordance with one embodiment of the present invention;
Fig. 2 is a sectional view of the jellied cake contained and sealed in a can in which a cream- or jam-like substance is contained in the central portion of a jelly-like substance; and
Fig. 3 is a view showing processes for manufacturing a jellied cake in accordance with another embodiment of the present invention.

### DESCRIPTION OF THE PREFERRED EMBODIMENTS

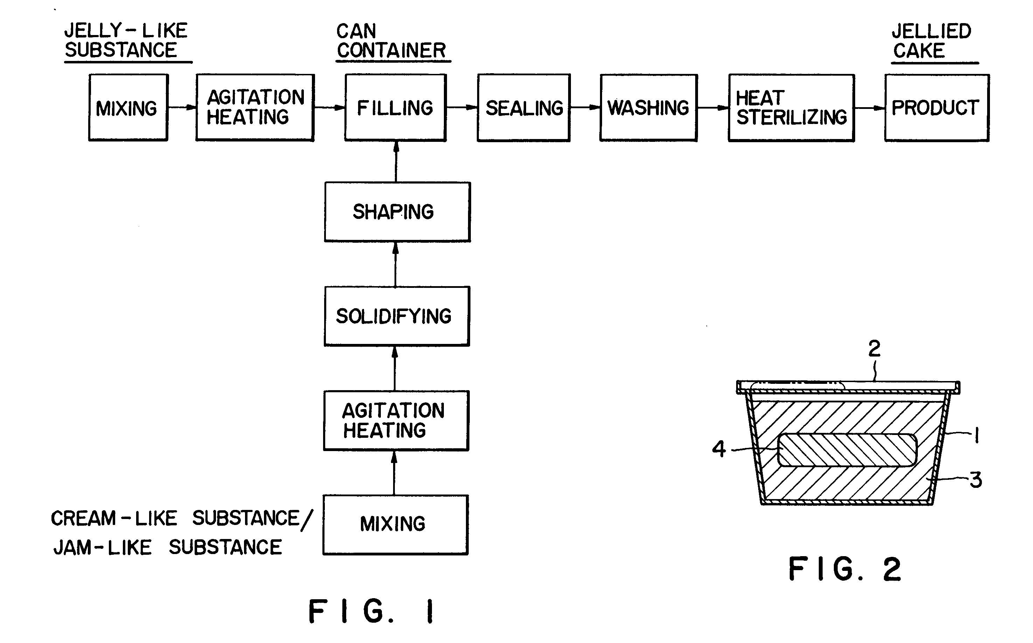

A jellied cake according to the present invention is manufactured by the processes shown in Fig. 1. The basic weight % of the components of mousse, jelly, and soft azuki-bean jelly used for the jelly-like substance of the present invention are shown as follows.

| 1. Mousse: | |
|---|---|
| Cheese paste | 18.0 % |
| Whole milk | 16.0 % |
| Egg yolks | 1.6 % |
| Liquor | 3.5 % |
| Cream | 3.5 % |
| Sugar | 12.2 % |
| Aroma | 0.2 % |
| Gelling agent | 1.4 % |
| Water | 43.6 % |
| Total | 100.0 % |

| 2. Jelly: | |
|---|---|
| Sugar | 14.0 % |
| Gelling agent | 1.6 % |
| Water | 56.4 % |
| Citric acid | 0.2 % |
| Liquor | 7.5 % |
| Fruit juice | 18.5 % |
| Total | 100.0 % |

| 3. Soft azuki-bean jelly | |
|---|---|
| Coarse wheat gluten | 18.0 % |
| Sugar | 36.0 % |
| Water | 45.0 % |
| Gelling agent | 1.0 % |
| Total | 100.0 % |

The cream-like substance in a sauce state and the jam-like substances which are to be alternatively incorporated into the jelly-like substance have the following basic percentage weight components.

| 1. Cream-like substances | |
|---|---|
| Cream | 30.0 % |
| Egg yolks | 15.0 % |
| Sugar | 12.0 % |
| Liquor | 5.0 % |
| Gelling agent | 1.0 % |
| Water | 37.0 % |
| Total | 100.0 % |

| 2. Jam-like substances | |
|---|---|
| Fresh fruit | 32.3 % |
| Thick malt syrup | 20.0 % |
| Water | 33.2 % |
| Citric acid | 0.2 % |
| Sugar | 12.0 % |
| Gelling agent | 1.4 % |
| Liqueur | 1.0 % |
| Total | 100.0 % |

Referring to Fig. 1, at the first step, the mousse, the jelly and the soft azuki-bean jelly having the basic percentage weights described above are mixed in the state in which the sugar and the gelling agent are preliminarily removed from the respective substances.

In the next step, the thus mixed substances are heated while agitating and adding the sugar and the gelling agent having a melting point more than a temperature required for heating and sterilizing the substances, i.e. about 75 to 95°C.

The jelly-like substance subjected to the heat treatment is then filled into a can 1 as retained in a liquid state of a temperature of about 70 to 90°C.

In the meantime, the cream-like substance in a sauce state or the jam-like substance having the components shown hereinabove and being adopted to be contained in the jelly-like substance contain the gelling agent having a melting point lower than that contained in the jelly-like substance. The cream- or jam-like substance is manufactured by mixing and heat agitating processes substantially identical to those described with respect to the preparation of the jelly-like substance. After the solidification of the cream- or jam-like substance, the solidified substance is formed into a predetermined shape.

The thus formed cream-like substance or jam-like substance is incorporated into the jelly-like substance accommodated in the can 1 in the semi-solid state at a time when the temperature of the cream-like substance or the jam-like substance becomes below the melting point of the gelling agent which acts to solidify the same. Namely, the jelly-like substance is solidified without being mixed with the cream-like substance or jam-like substance by incorporating the latter substance into the jelly-like substance which is in the semi-solid state at a temperature below the melting point of the gelling agent contained in the cream-like substance or jam-like substance.

The can 1 is thereafter sealed, washed and heat sterilized. In the heat sterilizing process, the heating temperature is set to the melting point of the gelling agent utilized in the manufacturing process of the jelly-like substance. At the completion of the heat sterilizing process, since the melting point in this process greatly exceeds the melting point of the gelling agent contained in the cream-like substance or the jam-like substance, the solidifying ability of the gelling agent is remarkably reduced or made substantially zero. For this reason, as shown in Fig. 2, the jelly-like substance 3 enclosing therein the cream-like substance or jam-like substance 4 is solidified under the condition that the cream- or jam-like substance 4 contained in the jelly-like substance 3 is in the semi-liquid state or the liquid-sauce state. The canned jellied cake can be obtained by finally applying a lid 2 to the can 1 with the jellied cake contained in the state described above.

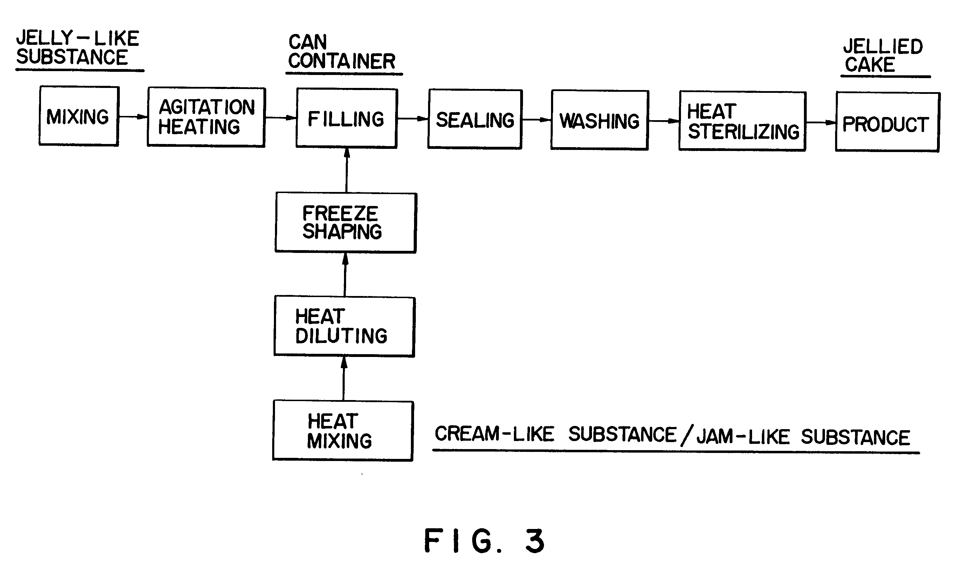

Fig. 3 shows processes for manufacturing a jellied cake according to another embodiment of the present invention.

According to this embodiment, a jellied cake is manufactured by the processes shown in Fig. 3. The basic percentage weight components of mousse, jelly, and soft azuki-bean jelly used for the jelly-like substances of this invention are shown as follows.

| 1. Mousse: | |
|---|---|
| Cheese paste | 18.0 % |
| Whole milk | 16.0 % |
| Egg yolks | 1.6 % |
| Liquor | 3.5 % |
| Cream | 3.5 % |
| Sugar | 12.2 % |
| Aroma | 0.2 % |
| Gelling agent | 1.4 % |
| Water | 43.6 % |
| Total | 100.0 % |

| 2. Jelly: | |
|---|---|
| Sugar | 14.0 % |
| Gelling agent | 1.6 % |
| Water | 56.4 % |
| Citric acid | 0.2 % |
| Liquor | 7.5 % |
| Fruit juice | 18.5 % |
| Total | 100.0 % |

| 3. Soft azuki-bean jelly | |
|---|---|
| Coarse wheat gluten | 18.0 % |
| Sugar | 36.0 % |
| Water | 45.0 % |
| Gelling agent | 0.9 % |
| Starch | 0.1 % |
| Total | 100.0 % |

In the first process for manufacturing a jellied cake according to this embodiment, the respective components are mixed in the state that when the mousse and the jelly-like substance are used, the sugar and the gelling agent are preliminarily removed and when the soft azuki-bean jelly is used, the sugar, the gelling agent and the starch are preliminarily removed.

The next heat agitating process is performed at a heating temperature of about 75 to 95°C while adding the components which are preliminarily removed in the former mixing process.

After the heat agitating process, the jelly-like substance in a liquid state at a temperature of about 70 to 90°C, is packed in the can container 1.

The cream-like substance in a sauce state or the jam-like substance to be contained in the jelly-like substance has the following basic percentage weight of components.

| 1. Cream-like substances | |
|---|---|
| Cream | 67.0 % |
| Egg yolks | 16.0 % |
| Sugar | 12.0 % |
| Liquor | 5.0 % |
| Total | 100.0 % |

| 2. Jam-like substances | |
|---|---|
| Fresh fruit | 33.3 % |
| Thick malt syrup | 33.2 % |
| Water | 33.2 % |
| Pectin | 0.2 % |
| Citric acid | 0.2 % |
| Total | 100.0 % |

The cream-like substance or jam-like substance is heated and mixed at a temperature of about 90 to 100°C and, thereafter, diluted with amylopectin (23%) and water (77%) at a temperature of about 80 to 95°C into a paste substance.

The thus diluted substance is then frozen at a temperature of about -2 to -18°C and the frozen cream-like substance or jam-like substance is contained in the jelly-like substance packed in the can 1 in a liquid state and having a temperature of about 70 to 90°C as described before. Namely, before the solidification of the jelly-like substance, the frozen cream- or jam-like substance is contained, whereby a part of the jelly-like substance surrounding the contained frozen cream- or jam-like substance is instantaneously solidified at a temperature of about 30°C so as to form a thin film surrounding the frozen substance by the temperature difference between the jelly-like substance and the frozen cream- or jam-like substance. Thus, the frozen shape of the cream- or jam-like substance contained in the jelly-like substance can be preserved as it is.

The can 1 with its contents is thereafter sealed, washed and then heated for sterilization at a temperature of about 80 to 110°C. The final product of the jellied cake contained in the can 1 can be thus obtained.

The product jellied food of the second embodiment is shown in Fig. 2 as a cross sectional view.

After the heat sterilization process, the cream- or jam-like substance has been maintained as it is in the solidified jelly-like substance without changing the quality for a long time.

In the foregoing, this invention makes reference to jellied cakes, but this invention may also be applied to a jellied foods such as fish, meat or the like in a paste or mousse state.

## Claims

1. A jellied food (3,4) to be contained in a container, then sealed and thereafter subjected to heat sterilization, comprising:
(a) a first substance (3) in a jelly state to be contained in said container (1) after mixing and heat agitating the same, said first substance (3) containing a gelling agent having a melting point greater than heating temperature during the heat sterilization process; and
(b) a second substance (4) in a cream- or jam-state to be incorporated into said first substance (3) in said container (1) after mixing, heat agitating, then solidifying and shaping the same in a predetermined shape,
**characterized in that**
(c) said second substance (4) is incorporated into said first substance (3) within a temperature range below the melting point of said gelling agent of the first substance (3),
(d) said second substance (4) contains a gelling agent having a melting point lower than that of the gelling agent of the first substance (3),
(e) said first and second substances (3,4) contained in the container (1) being heat sterilized at a temperature of the melting point of the gelling agent of the first substance (3) so that the second substance (4) is incorporated into said first substance in a semi-liquid state while preserving the shape and qualities of said second substance (4) as contained in said first substance (3).

2. A jellied food according to claim 1, **characterized in that** said second substance (4) is incorporated into said first substance (3) in the container (1) at substantially the central portion thereof.

3. A method of manufacturing a jellied food (3,4) contained in a container (1), then sealed and thereafter subjected to heat sterilization process, comprising the steps of:
(a) preparing a first substance (3) in a jelly state and containing a gelling agent;
(b) mixing and heat agitating the first substance (3);
(c) containing said mixed and heat agitated first substance (3) in a container (1);
(d) preparing at the same time as the preparation of said first substance (3) a second substance (4) in a cream- or jam-state by mixing, heat agitating, then solidifying and forming the same in a predetermined shape;
(e) containing said second substance (4) in said first substance (3) contained in the container (1);
(f) sealing and washing the container (1) with said first and second substances (3,4) contained; and
(g) heat sterilizing the container (1) with said first and second substances (3,4) contained;
**characterized in that**
(h) said gelling agent of the first substance (3) has a melting point greater than the heating temperature during the heat sterilization process;
(i) the first substance (3) is in a semi-liquid state when being mixed and heat agitated;
(j) said gelling agent of said second substance (4) has a melting point lower than that of the gelling agent of the first substance (3);
(k) said containing of said second substance (4) in said first substance (3) is done within a temperature range at which said first substance (3) is not solidified and a range below the melting point of the gelling agent of said first substance (3);
(l) said heat sterilization process is made at a temperature of the melting point of the gelling agent of the first substance (3) so as to incorporate said second substance (4) into said first substance (3) while preserving the shape and qualities of the second substance (4) in a semi-liquid state as contained in the container.

## Patentansprüche

1. Geliertes Nahrungsmittel (3,4), das in einen Behälter eingebracht dann verschlossen und danach der Hitzesterilisierung unterworfen wird, aufweisend:
a) Eine erste Substanz (3) in einem Geleezustand, die, nachdem sie gemischt und heiß gerührt wurde, in den Behälter (1) eingebracht worden ist, wobei die erste Substanz (3) ein Geliermittel enthält, das einen höheren Schmelzpunkt hat als die Erhitzungstemperatur während des Hitzesterilisierungs-Verfahrens; und
b) eine zweite Substanz (4) in einem Creme- oder Marmeladenzustand, die in die erste Substanz (3) in dem Behälter (1) inkorporiert worden ist nach dem Mischen, Heißrühren, dann Verfestigen und Formen derselben in eine vorbestimmte Form,
**dadurch gekennzeichnet,** daß
c) die zweite Substanz (4) in die erste Substanz (3) innerhalb eines Temperaturbereichs unterhalb des Schmelzpunkts des Geliermittels der ersten Substanz (3) inkorporiert wird,
d) die zweite Substanz (4) ein Geliermittel enthält, das einen niedrigeren Schmelzpunkt hat als das Geliermittel der ersten Substanz (3),
e) die in dem Behälter (1) enthaltene erste und zweite Substanz (3,4) bei einer Temperatur des Schmelzpunkts des Geliermittels der ersten Substanz (3) hitzesterilisiert werden, so daß die zweite Substanz (4) in einem halbflüssigen Zustand in die erste Substanz inkorporiert wird, wobei die Form und Eigenschaften der zweiten Substanz (4) erhalten bleiben, während sie in der ersten Substanz (3) enthalten ist.

2. Geliertes Nahrungsmittel gemäß Anspruch 1,
**dadurch gekennzeichnet,**
daß die zweite Substanz (4) in die erste Substanz (3) in dem Behälter (1) im im wesentlichen mittleren Bereich davon inkorporiert wird.

3. Verfahren zur Herstellung eines gelierten Nahrungsmittels (3,4), das in einem Behälter (1) enthalten ist, dann eingeschlossen und danach einem Hitzesterilisierungs-Verfahren unterworfen wird, folgende Schritte aufweisend:
a) Bereiten einer ein Geliermittel enthaltenden ersten Substanz (3) in einem Geleezustand;
b) Mischen und Heißrühren der ersten Substanz (3);
c) Einbringen der gemischten und heißgerührten ersten Substanz (3) in einen Behälter (1);
d) gleichzeitig mit der Bereitung der ersten Substanz (3) Bereiten einer zweiten Substanz (4) in einem Creme- oder Marmeladenzustand durch Mischen, Heißrühren, dann Verfestigen und Formen derselben in eine vorbestimmte Form;
e) Einbringen der zweiten Substanz (4) in die in dem Behälter (1) enthaltene erste Substanz (3);
f) Verschließen und Waschen dem Behälters (1) mit der enthaltnen ersten und zweiten Substanz (3,4); und
g) Hitzesterilisieren des Behälters (1) mit der enthaltenen ersten und zweiten Substanz (3,4);
**dadurch gekennzeichnet,** daß
h) das Geliermittel der ersten Substanz (3) einen höheren Schmelzpunkt hat als die Erhitzungstemperatur während des Hitzesterilisierungs-Verfahrens;
i) die erste Substanz (3) in einem halbflüssigen Zustand ist, wenn sie gemischt und heißgerührt wird;
j) das Geliermittel der zweiten Substanz (4) einen niedrigeren Schlmelzpunkt hat als das Geliermittel der ersten Substanz (3);
k) das Einbringen der zweiten Substanz (4) in die erste Substanz (3) innerhalb eines Temperaturbereichs durchgeführt wird, in dem die erste Substanz (3) nicht verfestigt ist, und einem Bereich unterhalb des Schmelzpunkts des Geliermittels der ersten Substanz (3);
l) das Hitzesterilisierungs-Verfahren bei einer Temperatur des Schmelzpunkts des Geliermittels der ersten Substanz (3) durchgeführt wird, um die zweite Substanz (4) in die erste Substanz (3) zu inkorporieren, wobei die Form und Eigenschaften der zweiten Substanz (4) in einem halbflüssigen Zustand erhalten bleiben, während sie in dem Behälter enthalten ist.

## Revendications

1. Aliment gélifié (3, 4) devant être contenu dans un récipient, puis scellé et soumis ensuite à une stérilisation à chaud, comprenant :
(a) une première substance (3) à l'état de gelée devant être contenue dans ledit récipient (1) après son mélange et son agitation à chaud, ladite première substance (3) contenant un agent de gélification ayant un point de fusion supérieur à la température de chauffage durant l'opération de stérilisation à chaud;
(b)une seconde substance (4) à l'état de crème ou de confiture qui doit être incorporée dans ladite première substance (3) dans ledit récipient (1) après son mélange, son agitation à chaud, puis sa solidification et son façonnage en une forme prédéterminée,
caractérisé en ce que
(c) ladite seconde substance (4) est incorporée dans ladite première substance (3) au sein d'une plage de températures inférieures au point de fusion dudit agent gélifiant de la première substance (3),
(d) ladite seconde substance (4) contient un agent gélifiant ayant un point de fusion inférieur à celui de l'agent gélifiant de la première substance (3),
(e) lesdites première et seconde substances (3, 4) contenues dans le récipient (1) étant stérilisées à chaud à une température égale au point de fusion de l'agent gélifiant de la première substance (3) de sorte que la seconde substance (4) est incorporée dans ladite première substance à l'état semi-liquide, cependant que sont conservées la forme et les qualités de ladite seconde substance (4) alors qu'elle est contenue dans ladite première substance (3).

2. Aliment gélifié selon la revendication 1, caractérisé en ce que ladite seconde substance (4) est incorporée dans ladite première substance (3) dans le récipient (1) dans sensiblement sa portion centrale.

3. Procédé de production d'un aliment gélifié (3, 4) contenu dans un récipient (1), puis scellé et ensuite soumis à une opération de stérilisation à chaud, comprenant les étapes de :
(a) préparation d'une première substance (3) à l'état de gelée et contenant un agent gélifiant;
(b) mélange et agitation à chaud de la première substance (3);
(c) introduction de ladite première substance (3) mélangée et agitée à chaud dans un récipient (1);
(d) préparation conjointement à la préparation de ladite première substance (3) d'une seconde substance (4) à l'état de crème ou de confiture par son mélange, son agitation à chaud, puis sa solidification et son façonnage en une forme prédéterminée;
(e) introduction de ladite seconde substance (4) dans ladite première substance (3) contenue dans le récipient (1);
(f) scellement et lavage du récipient (1) contenant lesdites première et seconde substances (3,4); et
(g) stérilisation à chaud du récipient (1) contenant lesdites première et seconde substances (3,4);
caractérisé en ce que
(h) ledit agent gélifiant de la première substance (3) possède un point de fusion supérieur à la température de chauffage durant l'opération de stérilisation à chaud;
(i) la première substance (3) est à l'état semi-liquide lorsqu'elle est mélangée et agitée à chaud;
(j) ledit agent gélifiant de ladite seconde substance (4) possède un point de fusion inférieur à celui de l'agent gélifiant de la première substance (3);
(k)ladite introduction de ladite seconde substance (4) dans ladite première substance (3) est opérée au sein d'une plage de températures auxquelles ladite première substance (3) n'est pas solidifiée et au sein d'une plage qui est inférieure au point de fusion de l'agent gélifiant de ladite première substance (3);
(l) ladite opération de stérilisation à chaud est opérée à une température égale au point de fusion de l'agent gélifiant de la première substance (3) de façon que ladite seconde substance (4) soit incorporée dans ladite première substance (3) cependant que sont conservées la forme et les qualités de la seconde substance (4) à l'état liquide telle que contenue dans le récipient.
